# EUROPEAN PATENT SPECIFICATION

(11) **EP 1 839 917 B1**
(45) Date of publication and mention of the grant of the patent: **28.04.2010**
(21) Application number: 07105153.6
(22) Date of filing: 28.03.2007
(51) Int. Cl.: B60C 27/14

(54) **Attachment device for an automatic-fitting snow chain**
Befestigungsvorrichtung für Schneeketten mit automatischer Anpassung
Dispositif de fixation pour chaîne anti-neige à fixation automatique

(30) Priority: 30.03.2006 IT MI20060610
(43) Date of publication of application: 03.10.2007
(73) Proprietor: MAGGI CATENE S.p.A., 23854 Olginate (LECCO) (IT)
(72) Inventor: Bouvier, Jean-Pierre, 1070, Puidoux-Gare (CH); Maggi, Corrado, 23896, Sirtori (IT)
(74) Representative: Faggioni, Carlo Maria

(56) References cited:
- EP-A- 0 226 899
- EP-A- 0 312 636
- GB-A- 2 086 318
- US-A- 4 799 522

## Description

### Background

### Field of the Invention

The present invention concerns an attachment device for a snow chain, in particular for a snow chain of the automatic fitting type.

As known, in the field of snow chains for road vehicles, automatic fitting models have existed for some time, i.e. chains attached to the wheel rim through elastic means capable of imparting a continuous push which automatically fits the chain on the wheel and keeps it in position. A typical example of this type of chain is the one successfully marketed by the Applicant under the trademark TRAK^{®}.

Automatic-fitting snow chains are attached to the wheel rim in various ways: one of these, suitable for rims prearranged with lightening holes, is for example the one shown in EP 226 899 disclosing the features of the preamble of claim 1. In this patent the attachment system consists of a series of elastic ropes, provided with hooks, which extend between a central constraint body and an equal number of apertures on the wheel rim.

This type of system, although valid alternatives (as disclosed for example in EP 1 562 764) exist today for light-alloy motorvehicle rims (without lightening holes), is still applicable to light commercial vehicles employing large rims provided with apertures.

However, this attachment device has shown drawbacks when significant lateral stresses occur, for example when driving around very tight curves or during manoeuvres which tend to push the chain towards the front side (outside) of the wheel. As a matter of fact, in these conditions, the lateral forces imparted to the chain are sometimes able to overcome the elastic return force of the attachment system, which would normally tend to keep the chain on the tyre: the chain may hence end up at least partly off the tyre, with imaginable consequences.

This drawback is due to the fact that the attachment system is elastic and it is hence always stretchable and yielding, to a greater or smaller extent. As a result, although it is possible, from a theoretical point of view, to counter this effect by increasing the elastic modulus of the elastic attachment means, this is impracticable because it would force the user to exert excessive effort during the chain-mounting step.

The object of the present invention is hence that of providing an automatic-fitting snow chain of the type shown in EP 226 899, which, however, is free from the above-mentioned problems.

Such object is achieved through an attachment device as described in its essential features in the accompanying main claim.

### Summary of the Invention

In summary, the device of the invention comprises at least a connecting central body, which may be fastened to the holes or apertures of a rim through restraint means which are substantially unstretchable upon traction, whose anchoring ends are kept engaged with said holes through further elastic means.

Other inventive aspects of the invention are described in the dependent claims.

### Brief Description of the Drawings

Further features and advantages of the device according to the invention will in any case be more evident from the following detailed description, given by way of example and illustrated in the accompanying drawings, wherein:
fig. 1 is a perspective view of the device according to the invention in a free condition;
fig. 2 is a perspective view of the device of fig. 1 in a constrained condition; and
fig. 3 is a perspective view of the device of fig. 2 mounted on a rim of a commercial vehicle.

### Best Way of Carrying out the Invention

In a way known per se, an attachment device for a snow chain of the above-mentioned type comprises a connecting central body, whereto spokes or elastic arms supporting the snow chain rolling track are connected. Elastic means capable of being fastened to the holes of a rim are further fastened to the same connecting central body.

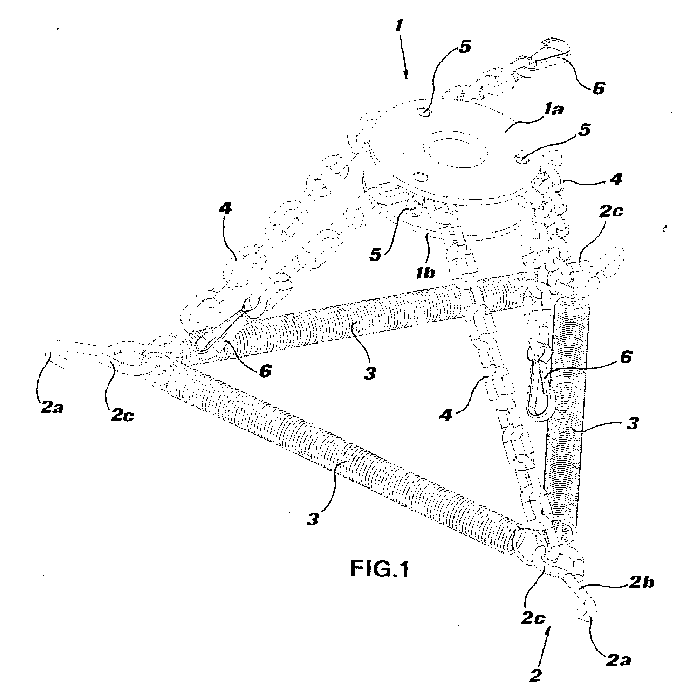

In fig. 1 the connecting central body is identified by reference number 1 and the elastic support arms are not shown.

According to the invention, the elastic fastening means comprise a series of hooks 2 - for example three hooks as shown exemplifyingly in the drawings - mutually connected by elastic elements 3, typically metal springs.

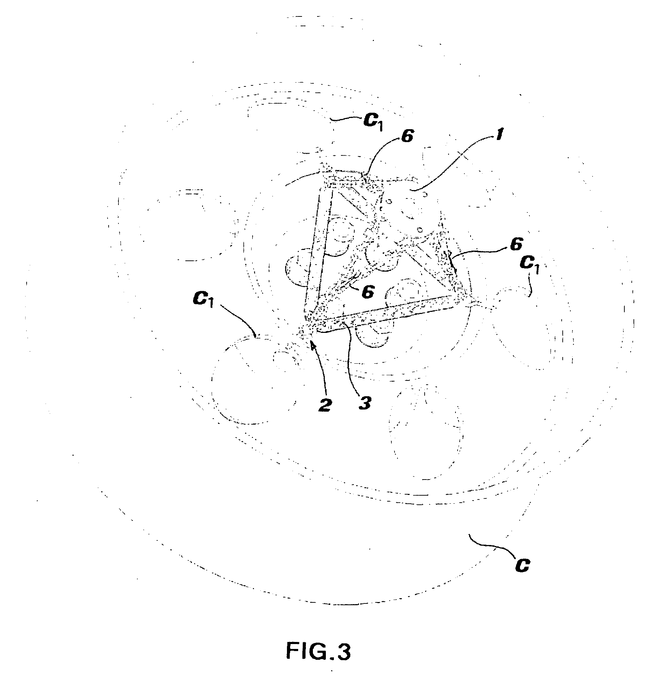

Each hook has an anchoring crook 2a, a hook body 2b, and an eyelet 2c. Each hook 2 is intended to be fastened to a hole or aperture Cl of a rim C (fig. 3)

Elastic elements 3 are connected to eyelet 2c of hooks 2, whereto also the ends of an equal number of small constraint metal chains 4 are attached.

Each small chain 4, as clearly illustrated in fig. 1, is attached at one end to its respective eyelet 2c and, at its other end, to the central body 1.

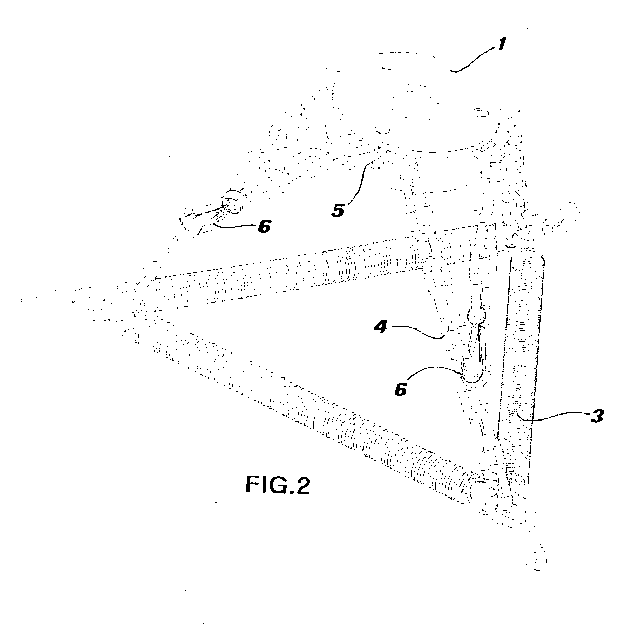

For such purpose, according to the preferred embodiment illustrated, central body 1 consists of two opposite discs 1a and 1b between which three small columns 5 extend. Accordingly, each small chain 4 is led to run through its respective small column 5 and to come out from central body 1 with the other end whereto a fastening spring catch 6 is mounted. As visible in fig. 2, fastening spring catch 6 is then locked at the branch of the adjacent small chain, in a desired position which establishes also the working length of such restraint means, i.e. the length of the chain portion between hook 2 and small column 5 of the connecting central body. Thereby it is accomplished that central body 1 remains rigidly restrained, in the direction of traction, to small chains 4 and to corresponding hooks 2. In this context, a force of traction is to be intended as a force which acts by moving away central body 1 from rim C.

Typically, precisely in the presence of lateral forces on the snow chain, which tend to push towards the outside of the tyre, traction is applied to central body 1.

Fig. 3 illustrates the way of mounting the device on rim C.

As can be guessed, in order to mount the attachment system, the user simply has to connect the three hooks 2 to the opposite holes C₁ of rim C, stretching elastic springs 3, while at the same time pushing body 1 towards the wheel to cause bending of the flexible arms supporting the rolling track.

Once hooks 2 have been fastened, the return force of elastic springs 3 keeps the system firmly attached to rim C, at least until pressure on central body 1 is released and small chains 4 are tensioned again by the elastic reaction of the support arms (not shown).

At this point, a traction on central body 1, intended to push away said body from the rim - for example due to the operative stresses mentioned above - ends up being taken up by small chains 4 which, being rigidly connected to hooks 2 and to rim C, do not allow any extension of the system and hence securely prevent the chain from coming off the tyre.

When one wants to remove the snow chain, it is necessary to push again central body 1 towards the wheel, overcoming the strong elastic reaction of the flexible support arms, so as to slacken small chains 4 and be able to disjoin hooks 2 from the rim imparting a modest traction on springs 3. Once the small chains are removed from rim holes C₁, the snow chain can be removed from the tyre.

The object set forth in the preliminary remarks has hence been fully achieved. In particular, an attachment system has been provided, which can be easily fastened to the holes of a rim (because the elastic modulus of the springs need not be too big), but which, once mounted, is rigidly constrained by the small chains and hence guarantees that the chain cannot accidentally come off the tyre even in adverse strain conditions.

It is understood, however, that the invention is not limited to the particular configuration illustrated above, which represents only a non-limiting example of the scope of the invention, but that a number of modifications are possible, all within the reach of a person skilled in the field, without departing from the scope of the invention.

For example, the number and the arrangement of the restraint means and of the elastic means can vary even dramatically with respect to the ones illustrated.

Moreover, the system connecting the small chains to the central body can be different, even if the one illustrated appears to be particularly advantageous, cost effective and easily adjustable in its length.

Finally, also the elastic means which are illustrated separately and equalling the number of the small chains, could be shaped as a single elastic rope connecting all the hooks.

## Claims

1. Attachment device for a snow chain suitable for fastening to the apertures of a vehicle rim, comprising at least a connecting central body (1), which can be fastened to the apertures (C₁) of the rim (C) through constraint means having respective hooks (2) apt to be engaged with the apertures (C₁) of the rim (C) towards which a plurality of flexible arms converge supporting a snow chain rolling track, **characterised in that** said constraint means are substantially unstretchable upon traction (4) and **in that** said hooks (2) are further kept engaged with said apertures (C₁) of the rim (C) through elastic means (3).

2. Device as claimed in claim 1), wherein said constraint means being rigid upon traction are small chains (4) connecting said central body (1) to respective hooks (2) for anchoring to the rim apertures (C₁).

3. Device as claimed in claim 2), wherein said small chains (4) run through openings of the central body (1) and have an end which can be attached to respective small adjacent chains through sparing catch means (6).

4. Device as claimed in any one of claims 1) to 3), wherein said elastic means are springs (3) mutually connecting said hooks (2).

5. Device as claimed in claim 4), wherein said hooks (2) and said springs (3) are three.

## Patentansprüche

1. Befestigungsvorrichtung für eine Schneekette, geeignet zur Befestigung an den Öffnungen einer Felge eines Fahrzeugs, umfassend zumindest einen zentralen Verbindungskörper (1), der an den Öffnungen (C₁) der Felge (C) durch Haltemittel befestigt werden kann, in deren Richtung eine Anzahl von flexiblen Armen konvergiert, die eine rollende Gleiskette einer Schneekette abstützt, **dadurch gekennzeichnet, dass** die genannten Haltemittel mit entsprechenden Haken (2) versehen sind, die geeignet sind, in die Öffnungen (C₁) der Felge (C) einzugreifen und die bei einem Zug (4) im Wesentlichen nicht dehnbar sind, wobei die genannten Haken (2) weiterhin durch elastische Mittel (3) im Eingriff mit den genannten Öffnungen (C₁) der Felge (C) gehalten sind.

2. Vorrichtung nach Anspruch 1, **dadurch gekennzeichnet, dass** die genannten Haltemittel, die bei Zug starr sind, kleine Ketten (4) sind, die den genannten zentralen Körper (1) mit entsprechenden Haken (2) verbinden, zur Verankerung auf den Öffnungen (C₁) der Felge.

3. Vorrichtung nach Anspruch 2, **dadurch gekennzeichnet, dass** die genannten kleinen Ketten (4) durch Öffnungen des zentralen Körpers (1) verlaufen und ein Ende aufweisen, das an jeweiligen kleinen benachbarten Ketten durch Federverriegelungsmittel (6) befestigt werden kann.

4. Vorrichtung nach einem der Ansprüche 1 bis 3, **dadurch gekennzeichnet, dass** die genannten elastischen Mittel Federn (3) sind, die die genannten Haken (2) miteinander verbinden.

5. Vorrichtung nach Anspruch 4, **dadurch gekennzeichnet, dass** drei der genannten Haken (2) und genannten Federn (3) vorhanden sind.

## Revendications

1. Dispositif de fixation pour chaîne à neige destiné à être fixé aux ouvertures d'une jante de roue de véhicule, comprenant au moins un corps central de connexion (1), qui peut être fixé aux ouvertures (C₁) de la jante (C) via des moyens de contrainte ayant des crochets respectifs (2) aptes à être engagés avec les ouvertures (C₁) de la jante (C), vers lequel corps central converge une pluralité de bras flexibles supportant une voie de roulement de chaîne à neige, **caractérisé en ce que** lesdits moyens de contrainte sont sensiblement inextensibles lors de la traction (4) et **en ce que** lesdits crochets (2) sont, en outre, maintenus en engagement avec lesdites ouvertures (C₁) de la jante (C) via des moyens élastiques (3).

2. Dispositif selon la revendication 1, dans lequel lesdits moyens de contrainte étant rigides lors de la traction sont de petites chaînes (4) reliant ledit corps central (1) aux crochets respectifs (2) pour ancrage aux ouvertures (C₁) de jante.

3. Dispositif selon la revendication 2, dans lequel lesdites petites chaînes (4) s'étendent via des ouvertures du corps central (1) et ont une extrémité qui peut être fixée à de petites chaînes adjacentes respectives via un moyen d'attache à ressort (6).

4. Dispositif selon l'une quelconque des revendications 1 à 3, dans lequel lesdits moyens élastiques sont des ressorts (3) reliant mutuellement lesdits crochets (2).

5. Dispositif selon la revendication 4, dans lequel lesdits crochets (2) et lesdits ressorts (3) sont au nombre de trois.
